# EUROPÄISCHE PATENTSCHRIFT

(11) **EP 2 848 814 B1**
(45) Veröffentlichungstag und Bekanntmachung des Hinweises auf die Patenterteilung: **28.02.2018**
(21) Anmeldenummer: 13184065.4
(22) Anmeldetag: 12.09.2013
(51) Int. Cl.: F04D 15/02, G01N 29/028

(54) **Vorrichtung zur Trockenlauferkennung**
Sensor for dry running protection
Dispositif de détection de la marche à sec

(43) Veröffentlichungstag der Anmeldung: 18.03.2015
(73) Patentinhaber: Grundfos Holding A/S, 8850 Bjerringbro (DK)
(72) Erfinder: Munk, Flemming, 8800 Viborg (DK)
(74) Vertreter: Patentanwälte Vollmann & Hemmer

(56) Entgegenhaltungen:
- EP-A1- 0 843 100
- US-A- 4 144 517
- US-A- 4 881 873

## Beschreibung

Die Erfindung betrifft ein Pumpenaggregat mit einer Vorrichtung zur Trockenlauferkennung.

Zum Schutz von Pumpen vor Trockenlaufen ist es bekannt, die elektrische Leitfähigkeit zwischen Pumpengehäuse der Pumpe und der zu pumpenden Flüssigkeit zu messen. Ohne Flüssigkeit besteht kein elektrisch leitender Kontakt zu dem Pumpengehäuse und der Widerstand steigt extrem an. An solchen Messsystemen ist nachteilig, dass der elektrische Kontakt stark von der elektrischen Leitfähigkeit der Flüssigkeit abhängt und zur Bestimmung des Trockenlaufens zumeist eine gewisse Zeit vergeht.

Aus EP 1 510 698 A2 ist bekannt, eine Schwinggabel, welche in einem Rohrflansch an der Pumpe angeordnet ist, zur Erkennung des Trockenlaufens einer Pumpe zu nutzen. Die Schwinggabel wird regelmäßig in Schwingung versetzt. Befindet sich die Schwinggabel nur in Kontakt mit Luft, so hat die Schwingung im Vergleich zum Kontakt der Schwinggabel mit Wasser eine längere Abklingzeit aufgrund der geringen Dämpfung. An diesem Aufbau ist nachteilig, dass ein zusätzlicher Rohrflansch an die Pumpe angebracht werden muss, um genügend Platz für die Schwinggabel bereitzustellen. Weiterhin findet hierbei eine Anregung mit einer niedrigen Frequenz statt. So kann es notwendig sein, über mehrere Anregungen die Abklingzeit zu bestimmen, um so den Einfluss der Anregung auf das Erkennen des Trockenlaufens selber ausschließen zu können.

US 4,881,873 offenbart einen Niveauschalter für eine Lenzpumpe. Der Schalter ist unabhängig von dem Pumpenaggregat angeordnet und weist in einem geschlossenen gekapselten Gehäuse eine Leiterplatte auf, an welcher ein Ultraschallsensor bzw. eine Antenne angeordnet ist. Die Leiterplatte ist im Inneren des Gehäuses geschützt vor Flüssigkeit angeordnet. Dabei ist der Sensor bzw. die Antenne in dem Gehäuse in einem Bereich angeordnet, welcher der Höhe des Wasserstandes, bei welchem die Pumpe eingeschaltet ist, entspricht. Erreicht der Wasserstand die Antenne, wird dies über den Sensor erfasst und die Pumpe kann eingeschaltet werden.

EP 0 843 100 A1 offenbart eine Tauchpumpe mit einem Pumpengehäuse, in welchem auch die erforderliche Elektronik zum Ein- und Ausschalten des Pumpenaggregates angeordnet ist. Dazu ist ein Ultraschallsensor vorgesehen, welcher den Wasserstand in der Umgebung des Pumpenaggregates zum Ein- und Ausschalten des Pumpenaggregates erfasst.

Es ist die Aufgabe der Erfindung ein Pumpenaggregat dahingehend zu verbessern, dass auf eine einfache Weise in das Pumpenaggregat eine Vorrichtung zur Trockenlauferkennung integriert werden kann.

Diese Aufgabe wird durch ein Pumpenaggregat mit den in Anspruch 1 angegebenen Merkmalen gelöst. Bevorzugte Ausführungsformen ergeben sich aus den Unteransprüchen, der nachfolgenden Beschreibung sowie den beigefügten Figuren. Hierbei können die in den Unteransprüchen und der Beschreibung angegebenen Merkmale jeweils für sich, aber auch in geeigneter Kombination die Lösung gemäß Anspruch 1 weiter ausgestalten.

Gegenstand der Erfindung ist ein Pumpenaggregat mit einem Pumpengehäuse, welches eine Vorrichtung zur Trockenlauferkennung gemäß der nachfolgenden Beschreibung aufweist, wobei der Ultraschall-Wandler der Vorrichtung im Pumpengehäuse derart angeordnet ist, dass der Ultraschall-Wandler mit einer Flüssigkeit innerhalb des Pumpengehäuses in Kontakt treten kann. In dem Pumpenaggregat, beispielsweise einer Kreiselpumpe, ist der Ultraschall-Wandler bevorzugt derart angeordnet, dass er einerseits mit einer Flüssigkeit innerhalb des Pumpengehäuses in Kontakt treten kann, andererseits aber nicht die Pumpwirkung der Pumpe behindert. Er ragt dazu bevorzugt nicht oder nur unwesentlich in das Innere der Pumpe bzw. in deren Strömungswege hinein. Er bildet bevorzugt einen Teil der Innenwand des Pumpengehäuses, d.h. eine den Strömungsweg begrenzenden Wandung, wobei er im Sinne der Erfindung auch etwas gegenüber der Innenwand zurückversetzt oder gegenüber dieser hervorstehen kann. Besonders bevorzugt ist die in Einbaurichtung zeigende Fläche des Ultraschall-Wandlers bündig mit der Innenwand des Pumpengehäuses angeordnet. Der Ultraschall-Wandler ist dabei vorzugsweise an einer solchen Position in dem Pumpengehäuse angeordnet, dass beim Trockenlaufen der Pumpe der Kontakt zwischen dem Ultraschall-Wandler und der Flüssigkeit frühzeitig verloren geht, wenn wichtige Pumpenteile wie Wellenlager und Abdichtungen, die durch ein Trockenlaufen beschädigt werden können, noch ausreichend von der Flüssigkeit geschmiert sind.

Die Vorrichtung zur Trockenlauferkennung weist einen Ultraschall-Wandler, welcher in Pumpengehäuse angeordnet ist und mit einem Frequenzgenerator zur Erzeugung eines elektrischen Signals mit vorgegebener Frequenz elektrisch verbunden ist, und eine Analyseeinheit auf, welche das an dem Ultraschall-Wandler anliegende elektrische Signal analysiert und dazu ausgebildet ist, auf Grundlage des Signalpegels des elektrischen Signals zu detektieren, ob ein Kontakt des Ultraschall-Wandlers mit einer Flüssigkeit besteht oder nicht. Der Ultraschall-Wandler ist dazu ausgebildet, elektrische Schwingungen in mechanische Schwingungen umzuwandeln. Die Schwingungsfrequenz liegt da bei im Ultraschall-Bereich. Ist der Ultraschall-Wandler in Kontakt mit Luft, so kann er bei seiner Anregungsfrequenz wenig gedämpft schwingen. Er weist dabei bestimmte elektrische Merkmale wie beispielsweise eine bestimmte Impedanz auf. Der Begriff Impedanz bezeichnet dabei den komplexen Widerstand, wobei auch nur der Realteil der Impedanz betrachtet werden kann. Befindet sich der Ultraschall-Wandler in Kontakt mit einer Flüssigkeit, vorzugsweise Wasser, so wird ein Teil der mechanischen Schwingungsenergie an das Wasser übergeben. Die Schwingung wird somit gedämpft, was eine Änderung des Schwingungsverhaltens des Ultraschall-Wandlers bewirkt. Diese Änderung lässt sich in den bestimmten elektrischen Merkmalen am Ultraschall-Wandler messen. So kann sich beispielsweise die Impedanz des Ultraschall-Wandlers ändern.

Die Analyseeinheit ist dazu ausgebildet, das am Ultraschall-Wandler anliegende elektrische Signal auszuwerten. Dazu weist sie eine Elektronik auf, welche dazu ausgebildet ist, aus dem elektrischen Signal bzw. der Änderung des elektrischen Signals zu erkennen, ob der Ultraschall-Wandler in Kontakt mit einer Flüssigkeit ist oder nicht. Erfindungsgemäß sind die elektrischen Schaltungen der Analyseeinheit derart ausgebildet, dass sie den Signalpegel des gemessenen elektrischen Signals analysieren können und aus dem Signalpegel erkennen, ob der Ultraschall-Wandler in Kontakt mit einer Flüssigkeit ist oder nicht.

Die mechanische Schwingung des Ultraschall-Wandlers im Ultraschall-Bereich ist für Menschen nicht hörbar. Weiterhin ist die Ultraschall-Schwingung mit einer Schwingungsperiode von etwa 50 µs und niedriger so schnell, dass Änderungen des Kontaktes des Ultraschall-Wandlers mit der Flüssigkeit ausreichend schnell erkannt werden können. Das Erkennen des Trockenlaufens ist über eine Analyse des elektrischen Signals durch eine Änderung der elektrischen Merkmale des Ultraschall-Wandlers möglich.

Der Ultraschall-Wandler ist im Pumpengehäuse der Pumpe angeordnet. Er weist dazu vorzugsweise eine derart kleine Bauform auf, dass er in Kontakt mit Flüssigkeiten im Innenraum des Pumpengehäuses treten kann und die Pumpwirkung der Pumpe nicht beeinträchtigt.

Der Frequenzgenerator und die Analyseeinheit sind vom Ultraschall-Wandler beabstandet und in einem Elektronikgehäuse außerhalb des Pumpengehäuses angeordnet. In dem Elektronikgehäuse sind der Frequenzgenerator und die Analyseeinheit bevorzugt spritzwassergeschützt angeordnet. Ein Kabel, ggf. mit mehreren Innenleitern, oder mehrere Kabel führen vorzugsweise von dem Elektronikgehäuse zu dem Ultraschall-Wandler und stellen somit die elektrische Verbindung zwischen dem Ultraschall-Wandler und den elektrischen Bauelementen her. In dem Elektronikgehäuse sind bevorzugt alle elektrischen Bauelemente der Vorrichtung zur Trockenlauferkennung mit Ausnahme des Ultraschall-Wandlers angeordnet. Je nach Ausführungsform der Erfindung können somit in dem Elektronikgehäuse ein Widerstand zur vorhergehend beschriebenen Reihenschaltung mit dem Ultraschall-Wandler, ein Hüllkurvendetektor und/oder weitere elektrische Bauelemente angeordnet sein. In dem Elektronikgehäuse lassen sich Bauelemente beispielsweise bei Defekten leicht ersetzen oder reparieren. Die getrennte Anordnung des Ultraschall-Wandlers hat darüber hinaus den Vorteil, dass dieser wenig Raum beansprucht und sich so gut in eine Pumpe integrieren lässt. Weiterhin ist es möglich, in dem Elektronikgehäuse noch weitere Bauelemente anzuordnen. So kann die Elektronik für die Trockenlauferkennung z. B. mit einer in dem Elektronikgehäuse vorhandenen weiteren Elektronik, wie beispielsweise einer Motorsteuerelektronik verbunden werden, um in die Motorsteuerung des Pumpenaggregats zu integrieren.

Bevorzugt weist der Ultraschall-Wandler eine plane Fläche auf, welche in Einbaulage in Kontakt mit Flüssigkeiten treten kann. Die plane Fläche bildet eine gleichmäßige Kontaktfläche. Vorteilhaft grenzt diese plane Fläche bündig an eine umgebende Innenseite des Pumpengehäuses an, so dass der Ultraschall-Wandler selber nicht in einen Innenraum des Pumpengehäuses hineinragt.

Weiterhin bevorzugt weist der Ultraschall-Wandler ein Gewinde auf, mit welchem er mit dem Pumpengehäuse, insbesondere flüssigkeitsdicht, verschraubt werden kann. So kann der Ultraschall-Wandler an einem Pumpengehäuse angebracht werden, an welchem eine entsprechende Aufnahme in Form eines Gewindes, insbesondere eines Gewindelochs vorhanden ist. Der Ultraschall-Wandler ist somit leicht austauschbar. Besonders bevorzugt ist das Gewinde derart ausgebildet, dass der Ultraschall-Wandler in eine schon am Pumpengehäuse vorhandenen Öffnung, beispielsweise ein Entlüftungsloch, mit entsprechendem Gegengewinde eingeschraubt werden kann. Der Ultraschall-Wandler kann somit ein Aufrüstteil für eine Pumpe bilden.

Der Frequenzgenerator ist dazu ausgebildet, ein elektrisches Signal mit vorgegebener Frequenz zu erzeugen. Dieses elektrische Signal wird dem Ultraschall-Wandler zugeleitet und in eine mechanische Schwingung mit der vorgegebenen Frequenz umgewandelt. Die Ultraschallfrequenz des Ultraschall-Wandlers ist somit gleich der vorgegebenen Frequenz des elektrischen Signals.

Die Analyseeinheit ist derart elektrisch mit dem Ultraschall-Wandler verbunden, dass sie einen elektrischen Signalpegel, welcher an dem Ultraschall-Wandler abfällt, messen und analysieren kann. Weiterhin ist die Analyseeinheit dazu ausgebildet, anhand des elektrischen Signals und insbesondere anhand der zeitlichen Änderung des elektrischen Signals zu erkennen, ob der Ultraschall-Wandler in Kontakt mit einer Flüssigkeit ist oder nicht. Dazu analysiert die Analyseeinheit den Signalpegel bzw. die Änderung des Signalpegels, wie beispielsweise den Spannungsabfall an dem Ultraschall-Wandler oder die Phase des elektrischen Signals. Ein Trockenlaufen kann die Analyseeinheit bei entsprechender Ausgestaltung beispielsweise dadurch erkennen, dass die Amplitude der Spannung am Ultraschall-Wandler einen vorgegebenen Wert erreicht oder unterschreitet, wobei etwa der vorgegebene Wert zwischen dem Wert bei vollständigem Kontakt des Ultraschall-Wandlers mit einer Flüssigkeit und dem Wert, bei dem es keinen Kontakt zwischen dem Ultraschall-Wandler mit einer Flüssigkeit gibt, liegt.

In einer besonders bevorzugten Ausführungsform liegt die vorgegebene Frequenz des elektrischen Signals des Frequenzgenerators zwischen 20 kHz und 80 kHz, vorzugsweise bei 40 kHz. Der Ultraschall-Wandler weist vorzugsweise eine Eigenfrequenz im Ultraschall-Bereich auf. Daher ist es vorteilhaft, wenn das elektrische Signal, welches er in eine mechanische Schwingung im Ultraschall-Bereich umwandelt, ebenfalls eine Frequenz im kHz- oder MHz-Bereich aufweist. Die Frequenz des elektrischen Signals liegt dabei zwischen 20 kHz und 80 kHz. Innerhalb dieses Bereiches ist die Schwingung für den Menschen nicht hörbar. Weiterhin sind Frequenzgeneratoren zur Erzeugung von Frequenzen in diesem mittleren kHz-Bereich kostengünstig und technisch stabil. Bevorzugt weist das elektrische Signal eine Frequenz auf, welche identisch mit der Eigenfrequenz des Ultraschall-Wandlers ist. Somit kann der Ultraschall-Wandler durch das elektrische Signal ohne größere Verluste zum Schwingen gebracht werden. Technisch kostengünstige Ultraschall-Wandler weisen beispielsweise eine Eigenfrequenz von 40 kHz auf.

Bevorzugt ist die Analyseeinheit dazu ausgebildet, ein elektrisches Signal auszuwerten, dessen Frequenz unterhalb des Ultraschall-Bereichs liegt. Wie schon aufgeführt, ist es technisch vorteilhaft, Signaländerungen in einem Zeitintervall zu analysieren, welche oberhalb der Periodendauer des elektrischen Signals selber liegt und bei der kleine Schwankungen und Änderungen des Kontakts des Ultraschall-Wandlers mit der Flüssigkeit nicht erkannt werden müssen. Es kann sich beispielsweise kurzfristig an den Ultraschall-Wandler ein Schmutzteilchen anlagern, was so zu einer schnellen Änderung der bestimmten elektrischen Merkmale des Ultraschall-Wandlers führt, wobei die elektrischen Merkmale schnell wieder zu ihren Ausgangswerten zurückkehren, nachdem das Schmutzteilchen sich wieder vom Ultraschall-Wandler entfernt hat.

Besonders bevorzugt ist die Analyseeinheit zur Auswertung eines elektrischen Gleichspannungs-Signals ausgebildet. Die Analyseeinheit analysiert somit nicht den Signalpegel eines sich periodisch verändernden Signals, sondern analysiert und erkennt den aktuellen Ist-Wert oder vereinzelte, andauernde Änderungen im zu messenden elektrischen Signal, wie sie sich bei dem Trockenlaufen einer Pumpe und somit aus der plötzlichen aber dennoch dauerhaft eintretenden Änderung eines der elektrischen Merkmale des Ultraschall-Wandlers ergeben. Periodische Änderungen werden nicht erfasst. Bevorzugt erkennt die Analyseeinheit durch Unterschreiten oder Überschreiten eines vorgegebenen Wertes, ob der Ultraschall-Wandler in Kontakt mit einer Flüssigkeit ist oder nicht.

Besonders bevorzugt ist ein Hüllkurvendetektor zwischen dem Ultraschall-Wandler und der Analyseeinheit elektrisch verbunden angeordnet. Der Hüllkurvendetektor dient dazu, aus einem sich zeitlich ändernden Signal die Einhüllende des Signals herauszufiltern. Zumindest periodische Anteile oberhalb einer gewissen Frequenz werden somit herausgefiltert. Es können aber auch alle periodischen Anteile des elektrischen Signals gefiltert werden, so dass ein Gleichspannungs- oder ein Gleichstrom-Signal verbleibt. Mit einem solchen Hüllkurvendetektor werden vorteilhaft gerade die Anteile des Signals herausgefiltert, welche für die Erkennung des Trockenlaufens der Pumpe nicht notwendig sind. Übrig bleibt ein Signal, dem insbesondere periodische Änderungen im Ultraschall-Bereich fehlen und das im Wesentlichen den zeitlichen Amplitudenverlauf des auszuwertenden elektrischen Signals wiedergibt. Aus diesem gefilterten Signal ist die durch den Kontaktverlust des Ultraschall-Wandlers zu der Flüssigkeit bedingte Änderung des Signalpegels weiterhin leicht analysierbar. Die Analyseeinheit ist ausgebildet, das durch den Hüllkurvendetektor gefilterte Signal zu analysieren und zu erkennen, ob der Ultraschall-Wandler in Kontakt mit einer Flüssigkeit ist oder nicht. Wie vorhergehend beschrieben analysiert sie dazu den Signalpegel des gefilterten Signals und vergleicht es mit einem vorgegebenen Wert und/oder sie analysiert die zeitliche Änderung des Signalpegels. Der Signalpegel kann während des Kontaktverlusts zwischen dem Ultraschall-Wandler und der Flüssigkeit bevorzugt größer werden. Er kann sich aber auch verringern.

Bevorzugt ist das elektrische Signal des Frequenzgenerators ein Rechtecksignal. Ein Rechtecksignal zeichnet sich durch seine Flankensteilheit beim Übergang von einer Amplitude zur nächsten aus. Der Ultraschall-Wandler wandelt das elektrische Rechtecksignal in eine mechanische Schwingung mit derselben Frequenz um.

Besonders bevorzugt ist ein Mikrocontroller vorgesehen, welcher als Frequenzgenerator und/oder als Analyseeinheit fungiert. Der Mikrocontroller ist vorzugsweise derart ausgestaltet, dass er das elektrische Signal mit der vorgegebenen Frequenz ausgibt. Er weist dazu vorzugsweise einen Ausgang zur Ausgabe des elektrischen Signals, insbesondere mit einer Frequenz im kHz-Bereich, auf. Ferner kann der Mikrocontroller vorzugsweise einen Eingang für das von dem Ultraschall-Wandler abgegriffene elektrische Signal aufweisen. Weiterhin ist der Mikrocontroller bevorzugt dazu ausgebildet, das an dem Ultraschall-Wandler abgegriffene Signal zu analysieren und im Sinne der Erfindung anhand des Signalpegels oder der Änderung des Signalpegels zu erkennen, ob der Ultraschall-Wandler in Kontakt mit einer Flüssigkeit ist oder nicht. Die Nutzung eines Mikrocontrollers vermindert die Anzahl der Bauteile, da dieser vorzugsweise mehrere Funktionen übernehmen kann. Der Mikrocontroller ist insbesondere bevorzugt dazu ausgelegt, alle notwendigen Operationen zur erfindungsgemäßen Analyse des elektrischen Signals durchzuführen.

Der Mikrocontroller ist bevorzugt mit einem Display, mit mindestens einer Signallampe und/oder mit einem Lautsprecher bzw. einem akustischen Signalgeber elektrisch verbunden. So kann die Vorrichtung zur Trockenlauferkennung dazu ausgebildet sein, ein Erkennen des Trockenlaufens zu signalisieren. Über das angeschlossene Display kann beispielsweise das Trockenlaufen graphisch visuell dargestellt werden. Eine Signallampe, beispielsweise LED, kann zu einer visuellen Warnung durch Aufleuchten und/oder durch Wechsel der Farbgebung das Erkennen des Trockenlaufens anzeigen. Alternativ oder zusätzlich kann die Trockenlauferkennungsvorrichtung z. B. einen Lautsprecher aufweisen, der bei Erkennen des Trockenlaufens der Pumpe ein akustisches Warnsignal ausgibt. Durch diese Ausgabemöglichkeiten ist es einem Bediener der Pumpe möglich, die Pumpe bspw. durch Abschalten vor Schäden durch das Trockenlaufen zu schützen.

In einer besonders bevorzugten Ausführungsform sind der Frequenzgenerator und der Ultraschall-Wandler mit einem Widerstand in Reihe elektrisch verbunden. Der Frequenzgenerator gibt ein elektrisches Signal aus, welches an dem Widerstand und an dem Ultraschall-Wandler abfällt. Die Reihenschaltung des Widerstands und des Ultraschall-Wandlers bildet einen Spannungsteiler. Abhängig von den Impedanzen des Widerstandes und des Ultraschall-Wandlers ergibt sich somit jeweils ein Spannungsabfall an jedem der beiden Bauelemente. Somit hängt das Signal, welches von der Analyseeinheit alleine an dem Ultraschall-Wandler und nicht an dem Widerstand abgegriffen wird, nicht nur davon ab, ob der Ultraschall-Wandler in Kontakt mit einer Flüssigkeit ist oder nicht, sondern auch, wie das Impedanzverhältnis vom Widerstand und Ultraschall-Wandler zueinander ist. Weiterhin vorteilhaft ist, dass durch den Widerstand ein Kurzschluss am Frequenzgenerator beispielsweise bei einer äußerst geringen Impedanz des Ultraschall-Wandlers verhindert wird.

Besonders bevorzugt weist der Ultraschall-Wandler eine plane Fläche auf, mit welcher er in Kontakt mit einer Flüssigkeit tritt oder nicht. Die plane Fläche ist somit zweckmäßigerweise der Teil des Ultraschall-Wandlers, welcher in das Innere des Pumpengehäuses zeigt. Die Flächennormale der planen Fläche zeigt dabei in einen Innenraum des Pumpengehäuses und die plane Fläche des Ultraschall-Wandlers bildet vorzugsweise selber einen Teil der den Strömungsweg begrenzenden Innenwand des Pumpengehäuses. Vorteilhaft ist der Ultraschall-Wandler in der Pumpe flüssigkeitsdicht und wieder lösbar eingesetzt, insbesondere verschraubt. Die Pumpe weist bevorzugt einen Anschluss oder eine Öffnung auf, welche zum Innenraum des Pumpengehäuses hin geöffnet ist. Der Ultraschall-Wandler weist ein Gehäuse auf, welches bevorzugt über ein Gewinde an dem Anschluss des Pumpengehäuses angeschraubt bzw. in eine Öffnung des Pumpengehäuses eingeschraubt werden kann. Somit kann man bei einem Defekt des Ultraschall-Wandlers diesen leicht wieder von der Pumpe abschrauben und reparieren bzw. durch einen neuen ersetzen. Im Sinne der Erfindung kann die Verbindung zwischen dem Pumpengehäuse und dem Ultraschall-Wandler auch auf andere Weise, beispielsweise als ein Bajonett-Verschluss oder eine Klemmhalterung, ausgebildet sein.

Besonders vorteilhaft sind das Pumpengehäuse und/oder das Elektronikgehäuse dazu ausgebildet, dass eine Vorrichtung zur Trockenlauferkennung nachgerüstet werden kann. So kann der Ultraschall-Wandler vorzugsweise so ausgebildet sein, dass er in eine vorhandene Öffnung eines Pumpengehäuses, wie z. B. eine Entlüftungsöffnung eingeschraubt werden kann. Das Elektronikgehäuse kann ein Zusatzbauteil bilden, welches an dem Pumpengehäuse angeordnet werden kann. So kann in dem Elektronikgehäuse die Elektronik der Vorrichtung zur Trockenlauferkennung wie vorhergehend beschrieben angeordnet werden.

Bevorzugt kann in dem Elektronikgehäuse ein Mikrocontroller angeordnet sein, der die Funktionen der Analyseeinheit und des Funktionsgenerators übernimmt. Somit wird die Teileanzahl verringert, was die Montage der elektrischen Bauelemente im Elektronikgehäuse vereinfacht. Weiterhin kann der Mikrocontroller elektrisch mit einem Display, mindestens einer Signallampe und/oder einem Tongeber im oder am Elektronikgehäuse verbunden sein. Über den Mikrocontroller kann somit das Erkennen des Trockenlaufens visuell bzw. hörbar ausgegeben werden. Soweit technisch möglich, kann ein Mikrocontroller, der für andere Zwecke in einem Elektronikgehäuse des Pumpenaggregats vorhanden ist, dazu genutzt werden, die Funktionen des Frequenzgenerators und der Analyseeinheit zu übernehmen.

Besonders bevorzugt kann eine Schutzeinheit mit der Vorrichtung zur Trockenlauferkennung und dem Antriebsmotor der Pumpe elektrisch verbunden oder in diese integriert sein, wobei die Schutzeinheit zum Ausschalten des Antriebsmotors bei Trockenlaufen der Pumpe ausgebildet ist. Wird über die Analyseeinheit ermittelt, dass der Ultraschall-Wandler nicht mehr in Kontakt mit einer Flüssigkeit ist und somit die Pumpe trocken läuft, so erfolgt eine Ansteuerung der Schutzeinheit, welche das Ausschalten des Antriebsmotors der Pumpe bewirkt. Das Ausschalten des Motors des Pumpenaggregats kann dabei durch einfaches Unterbrechen der Stromzufuhr erfolgen, es kann aber auch eine Ausschaltsequenz beispielsweise für ein geregeltes Abschalten des Motors erfolgen. Bevorzugt kann die Schutzeinheit mit dem beschriebenen Mikrocontroller verbunden oder durch den Mikrocontroller ausgebildet sein. Der Mikrocontroller übernimmt somit nicht nur die Aufgaben des Frequenzgenerators und der Analyseeinheit, sondern weiterhin auch die Funktion der Schutzeinheit und ist in der Lage, die Pumpe bei Erkennen eines Trockenlaufens abzuschalten. Die Schutzeinheit kann im einfachsten Fall durch einen Schalter, wie z.B. ein Relais gebildet sein oder aber z.B. durch Zusammenwirken von Trockenlauferkennung und Motorsteuerung in der Weise realisiert sein, dass die Motorsteuerung den Motor bei Trockenlauf abschaltet.

Bevorzugt ist die Schutzeinheit in einem Elektronikgehäuse am Pumpengehäuse angeordnet. In dem Elektronikgehäuse können dabei auch mindestens eine der vorhergehend aufgeführten Elektroniken, wie beispielsweise Teile der Vorrichtung zur Trockenlauferkennung und/oder der Motorsteuerung, angeordnet sein, wobei die Schutzeinheit mit der Vorrichtung zur Trockenlauferkennung und einer Motorsteuerelektronik oder mit dem Netzanschluss für den Motor des Pumpenanschlusses elektrisch verbunden ist.

Die Erfindung ist nachfolgend anhand der in den Zeichnungen dargestellten Ausführungsbeispiele näher erläutert. Es zeigen:
Fig. 1 eine Schaltskizze der Vorrichtung zur Trockenlauferkennung und
Fig. 2 einen schematischen Längsschnitt eines erfindungsgemäßen Kreiselpumpenaggregats mit einer Vorrichtung zur Trockenlauferkennung gemäß Fig. 1.

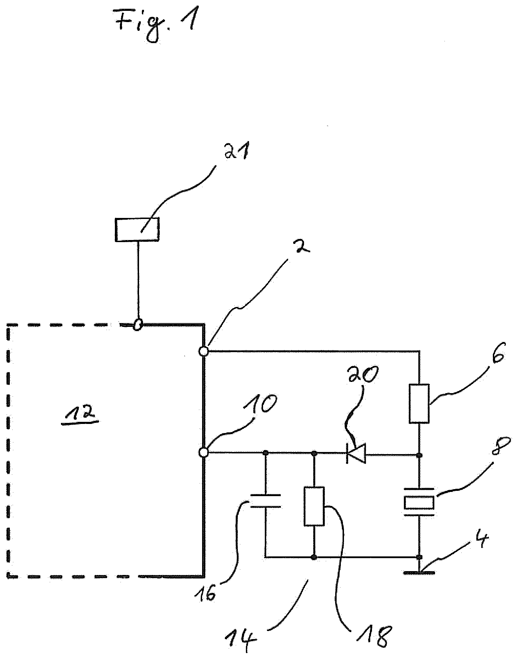

Die Vorrichtung gemäß der in Fig. 1 gezeigten Schaltskizze weist einen Mikrocontroller 12 auf, der einen Frequenzgenerator und eine Analyseeinheit bildet, d.h. er übernimmt deren Funktionen. Dazu weist er einen Ausgang 2 des Frequenzgenerators und Eingang 10 der Analyseeinheit auf. Zwischen dem Ausgang 2 des Frequenzgenerators und einem Bezugspotential 4, welches durch den Mikrocontroller 12 vorgegeben wird, ist eine Reihenschaltung eines ersten ohmschen Widerstands 6 und eines Ultraschall-Wandlers 8 ausgebildet. Der Eingang 10 der Analyseeinheit ist elektrisch mit dem Ultraschall-Wandler 8 verbunden.

Am Ausgang 2 des Frequenzgenerators wird bezüglich zum Bezugspotential 4 ein elektrisches Signal mit einer vorgegebenen Frequenz von etwa 40 kHz erzeugt, welches abhängig von dem Impedanzverhältnis des ersten ohmschen Widerstandes 6 und des Ultraschall-Wandlers 8 entsprechend spannungsgeteilt an dem ersten ohmschen Widerstand 6 und dem Ultraschall-Wandler 8 abfällt. Der Anteil des elektrischen Signals, welcher an dem Ultraschall-Wandler 8 abfällt, wird durch den Ultraschall-Wandler 8 in eine mechanische Schwingung umgewandelt, welche ebenfalls eine Frequenz von etwa 40 kHz aufweist.

In Funktion der Analyseeinheit ist der Mikrocontroller 12 dazu ausgebildet, den Teil des elektrischen Signals, welcher an dem Ultraschall-Wandler 8 abgegriffen und am Eingang 10 der Analyseeinheit anliegt, derart auszuwerten, dass der Mikrocontroller 12 erkennt, ob der Ultraschall-Wandler 8 in Kontakt mit einer Flüssigkeit ist oder nicht. Steht der Ultraschall-Wandler 8 in Kontakt mit einer Flüssigkeit, beispielsweise Wasser, so wird er in seiner mechanischen Schwingung durch die Flüssigkeit stärker gedämpft, als wenn er in Kontakt mit einem Gas wie beispielsweise Luft steht. Diese erhöhte Dämpfung des Ultraschall-Wandlers 8 zeigt sich in einem erhöhten Spannungspegel am Ultraschall-Wandler 8. Am Ultraschall-Wandler 8 kann somit ein höherer Signalanteil im Vergleich zum Kontakt mit Luft abgegriffen werden. Die Analyseeinheit des Mikrocontrollers 12 ist dazu ausgebildet, den Pegel bzw. den Betrag des Pegels des Signalanteils oder deren Änderung zu erkennen. Wertet der Mikrocontroller 12 in Funktion der Analyseeinheit die Spannungsamplitude des elektrischen Signals, welches an dem Ultraschall-Wandler 8 abfällt, aus, so wird er bei Kontakt des Ultraschall-Wandlers 8 mit einer Flüssigkeit einen hohen Spannungsabfall erkennen. Läuft die Pumpe trocken, d. h. der Ultraschall-Wandler 8 verliert den Kontakt zu der Flüssigkeit oder er steht nicht mehr in Kontakt mit der Flüssigkeit, so sinkt die gemessene Spannung.

Zwischen dem Eingang 10 der Analyseeinheit und dem Ultraschall-Wandler 8 ist ein Hüllkurvendetektor 14 angeordnet. Der Hüllkurvendetektor 14 besteht in diesem Beispiel aus einem Kondensator 16, einem zweiten ohmschen Widerstand 18, welche parallel zum Ultraschall-Wandler 8 zwischen dem Eingang 10 der Analyseeinheit und dem Bezugspotential 4 angeordnet sind, und einer Diode 20, welche in einer Masche mit der Parallelschaltung des Kondensators 16 und des zweiten ohmschen Widerstandes 18 und dem Ultraschall-Wandler 8 angeordnet ist. Die Diode 20 ist in Durchlassrichtung angeordnet.

Der Hüllkurvendetektor 14 ist derart ausgebildet, dass an dem Eingang 10 der Analyseeinheit ein Signal anliegt, welchem der Spannungsabfall an dem Ultraschall-Wandler 8 zugrundeliegt, und welches zumindest keine hochfrequenten Anteile im kHz-Bereich oder höher mehr aufweist. Dabei sorgt die Diode 20 dafür, dass der positive Signalanteil durchgelassen wird und nachfolgend durch die Parallelschaltung bestehend aus dem Kondensator 16 und dem zweiten ohmschen Widerstand 18 die hochfrequenten Anteile aus dem Signal gefiltert werden. Über den Eingang 10 der Analyseeinheit wird dem Mikrocontroller 12 somit nur noch ein Signal zugeleitet, dessen zeitliche Veränderungen im Amplitudensignal im Wesentlichen darauf beruhen, ob der Ultraschall-Wandler 8 in Kontakt mit einer Flüssigkeit ist oder nicht.

Der Mikrocontroller 12 ist in diesem Beispiel weiterhin elektrisch mit einer Schutzeinheit 21 verbunden, welche ausgebildet ist, den Motor des Pumpenaggregats abzuschalten. Somit lässt sich über die Schutzeinheit 21 bei Erkennen des Trockenlaufens ein Motor eines Pumpenaggregats abschalten. Dies ist jedoch kein für die Erfindung zwingendes Merkmal.

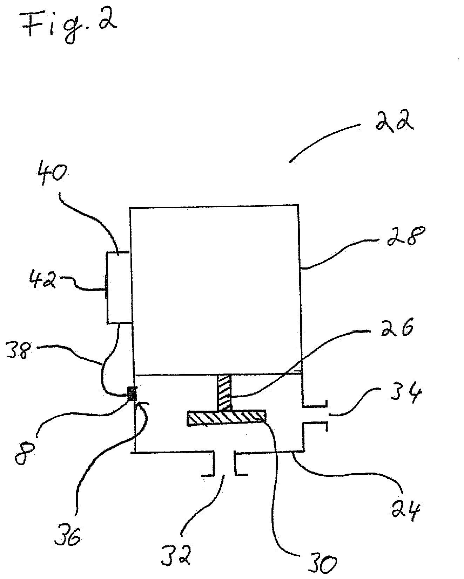

In Fig. 2 ist ein Ausführungsbeispiel eines Pumpenaggregats in Form eines Kreiselpumpenaggregats 22 mit der erfindungsgemäßen Vorrichtung zur Trockenlauferkennung in schematischer Darstellung gezeigt. Das Kreiselpumpenaggregat 22 weist in seinem Pumpengehäuse 24 eine Welle 26 auf. Die Welle 26 wird von einem Motor in einem Motorgehäuse 28 angetrieben. An der Welle 26 ist in dem Pumpengehäuse 24 ein Laufrad 30 angeordnet. Es können aber auch mehrere Laufräder 30 an der Welle 26 angeordnet sein. Das Pumpengehäuse 24 weist in bekannter Weise einen Sauganschluss 32 und einen Druckanschluss 34 auf.

Ein Elektronikgehäuse 40 ist am Motorgehäuse 28 angeordnet. Im Elektronikgehäuse 40 ist eine Motorelektronik angeordnet, über welchen eine Steuerung des Kreiselpumpenaggregats 22 erfolgt.

In einer Öffnung 36 im Pumpengehäuse 24 ist der Ultraschall-Wandler 8 über ein Gewinde eingeschraubt. Der Ultraschall-Wandler 8 ist über ein elektrisches Kabel 38, welches außerhalb des Pumpengehäuses 24 geführt ist, mit dem Elektronikgehäuse 40 verbunden. Entsprechend der Schaltskizze in Fig. 1 ist neben dem Mikrocontroller 12 der Hüllkurvendetektor 14 und ein erster ohmscher Widerstand 6 in dem Elektronikgehäuse 40 als Teil der Elektronik angeordnet, wobei der Ultraschall-Wandler 8 über das Kabel 38 gemäß Fig. 1 mit den Bauelementen im Elektronikgehäuse 40 elektrisch verbunden ist. Durch den Mikrocontroller 12 wird registriert, ob an der Stelle im Inneren des Pumpengehäuses 24, an welcher der Ultraschall-Wandler 8 angeordnet ist, Kontakt mit der zu pumpenden Flüssigkeit besteht oder nicht. Der Ultraschall-Wandler 8 ist derart ausgebildet, dass er bevorzugt in eine Entlüftungsöffnung im Pumpengehäuse 24 eingeschraubt werden kann. Dies ermöglicht eine einfache Nachrüstung an bestehenden Pumpenaggregaten.

Das Elektronikgehäuse 40 weist ein Display 42 auf, welches an der Außenseite des Elektronikgehäuses 40 angeordnet ist und welches mindestens zur Anzeige ausgebildet ist, ob ein Trockenlaufen durch den Mikrocontroller 12 erkannt wurde oder nicht. Das Display 42 ist mit dem Mikrocontroller 12 elektrisch verbunden. Weiterhin können auch weitere Daten wie beispielsweise die Drehzahl und die Laufzeit des Kreiselpumpenaggregats 22 auf dem Display 42 angezeigt werden. Alternativ oder zusätzlich kann neben dem Display 42 auch mindestens eine LED im Elektronikgehäuse 40 angeordnet sein und elektrisch mit dem Mikrocontroller 12 verbunden sein. Somit ist der Mikrocontroller 12 in der Lage, über die LED anzuzeigen, ob er ein Trockenlaufen des Kreiselpumpenaggregats 22 registriert hat oder nicht.

Zum Schutz des Kreiselpumpenaggregats 22 vor einem Trockenlaufen ist in diesem Beispiel der Mikrocontroller 12 derart mit der Schutzeinheit 21 des Motors, welche ebenfalls im Elektronikgehäuse 40 angeordnet ist, verbunden, dass beim Erkennen des Trockenlaufens des Kreiselpumpenaggregats 22 der Motor im Motorgehäuse 28 über die Schutzeinheit 21 abgeschaltet werden kann. Somit lässt sich verhindern, dass durch das Trockenlaufen des Kreiselpumpenaggregats 22 beispielsweise ein Lager und das Laufrad 30 an der Welle 26 beschädigt werden. Die Erfindung könnte jedoch auch ohne eine solche Schutzeinheit 21 verwirklicht werden.

Die Schutzeinheit 21 ist in diesem Beispiel in die Motorsteuerelektronik des Kreiselpumpenaggregats 22 integriert. So wird bei der Montage des Elektronikgehäuses 40 die Schutzeinheit 21 als Teil der Motorsteuerelektronik des Kreiselpumpenaggregats 22 mit eingebaut. In einer alternativen Ausführungsform kann die Schutzeinheit 21 als Zusatzbauteil ausgebildet sein, welches in dem Elektronikgehäuse 40 oder in einem eigenen Elektronikgehäuse angeordnet werden kann und mit dem Motor oder der Motorsteuerelektronik elektrisch verbunden werden kann. Somit wird ein Nachrüsten eines bereits montierten Kreiselpumpenaggregats 22 mit einem Trockenlaufschutz ermöglicht oder der Trockenlaufschutz kann modular als Option in das Kreiselpumpenaggregat 22 eingebaut werden.

### Bezugszeichenliste

- 2: - Ausgang Frequenzgenerator
- 4: - Bezugspotential
- 6: - erster ohmscher Widerstand
- 8: - Ultraschall-Wandler
- 10: - Eingang Analyseeinheit
- 12: - Mikrocontroller
- 14: - Hüllkurvendetektor
- 16: - Kondensator
- 18: - zweiter ohmscher Widerstand
- 20: - Diode
- 21: - Schutzeinheit
- 22: - Kreiselpumpenaggregat
- 24: - Pumpengehäuse
- 26: - Welle
- 28: - Motorgehäuse
- 30: - Laufrad
- 32: - Sauganschluss
- 34: - Druckanschluss
- 36: - Anschluss
- 38: - Kabel
- 40: - Elektronikgehäuse
- 42: - Display

## Patentansprüche

1. Pumpenaggregat (22) mit einem Pumpengehäuse und einer Vorrichtung zur Trockenlauferkennung mit einem Ultraschall-Wandler (8), welcher in dem Pumpengehäuse (24) derart angeordnet ist, dass der Ultraschall-Wandler (8) mit einer Flüssigkeit innerhalb des Pumpengehäuses (24) in Kontakt treten kann und bei welcher der Ultraschall-Wandler (8) mit einem Frequenzgenerator (2) zur Erzeugung eines elektrischen Signals mit vorgegebener Frequenz elektrisch verbunden ist, und die Vorrichtung zur Trockenlauferkennung eine Analyseeinheit (10) aufweist, welche das an dem Ultraschall-Wandler (8) anliegende elektrische Signal analysiert und dazu ausgebildet ist, auf Grundlage des Signalpegels des elektrischen Signals zu detektieren, ob der Ultraschall-Wandler (8) mit einer Flüssigkeit in Kontakt ist oder nicht, wobei der Frequenzgenerator (2) und die Analyseeinheit (10) in einem Elektronikgehäuse (40) außerhalb des Pumpengehäuses (24) angeordnet sind.

2. Pumpenaggregat nach Anspruch 1, **dadurch gekennzeichnet, dass** die vorgegebene Frequenz des elektrischen Signals des Frequenzgenerators (2) zwischen 20 kHz und 80 kHz, vorzugsweise bei 40 kHz liegt.

3. Pumpenaggregat nach Anspruch 1 oder 2, **dadurch gekennzeichnet, dass** die Analyseeinheit (10) dazu ausgebildet ist, ein elektrisches Signal auszuwerten, dessen Frequenz unterhalb des Ultraschall-Bereichs liegt.

4. Pumpenaggregat nach Anspruch 3, **dadurch gekennzeichnet, dass** die Analyseeinheit (10) zur Auswertung eines elektrischen Gleichstrom-Signals ausgebildet ist.

5. Pumpenaggregat nach einem der vorhergehenden Ansprüche, **dadurch gekennzeichnet, dass** ein Hüllkurvendetektor (14) zwischen dem Ultraschall-Wandler (8) und der Analyseeinheit (10) elektrisch verbunden angeordnet ist.

6. Pumpenaggregat nach einem der vorhergehenden Ansprüche, **dadurch gekennzeichnet, dass** das elektrische Signal des Frequenzgenerators (2) ein Rechtecksignal ist.

7. Pumpenaggregat nach einem der vorhergehenden Ansprüche, **dadurch gekennzeichnet, dass** ein Mikrocontroller (12) vorgesehen ist, welcher als Frequenzgenerator (2) und/oder als Analyseeinheit (10) fungiert.

8. Pumpenaggregat nach Anspruch 7, **dadurch gekennzeichnet, dass** der Mikrocontroller (12) mit einem Display (42), mit mindestens einer Signallampe und/oder mit einem Lautsprecher elektrisch verbunden ist.

9. Pumpenaggregat nach einem der vorhergehenden Ansprüche, **dadurch gekennzeichnet, dass** der Frequenzgenerator (2) und der Ultraschall-Wandler (8) mit einem Widerstand (6) in Reihe elektrisch verbunden sind.

10. Pumpenaggregat (22) nach einem der vorangehenden Ansprüche, **dadurch gekennzeichnet, dass** eine Schutzeinheit mit der Vorrichtung zur Trockenlauferkennung und mit dem Antriebsmotor der Pumpe (22) elektrisch verbunden ist, wobei die Schutzeinheit zum Ausschalten des Antriebsmotors bei Erkennen des Trockenlaufens der Pumpe (22) durch die Vorrichtung zur Trockenlauferkennung ausgebildet ist.

## Claims

1. A pump assembly (22) with a pump casing, **characterised by** a device for dry-running recognition with an ultrasonic transducer (8) which is arranged in the pump casing (24) in a manner such that the ultrasonic transducer (8) can come into contact with a fluid within the pump casing (24) and concerning which the ultrasonic transducer (8) is electrically connected to a frequency generator (2) for generating an electrical signal with a defined frequency, and the device for dry-running recognition comprises an analysis unit (10) which analyses the electrical signal present at the ultrasonic transducer (8) and which is designed to detect whether the ultrasonic transducer (8) is in contact with a fluid or not, on the basis of the signal level of the electrical signal, wherein the frequency generator (2) and the analysis unit (10) are arranged in an electronics housing (40) outside the pump casing (24).

2. A pump assembly according to claim 1, **characterised in that** the defined frequency of the electrical signal of the frequency generator (2) lies between 20 kHz and 80 kHz, preferably at 40 kHz.

3. A pump assembly according to claim 1 or 2, **characterised in that** the analysis unit (10) is designed to evaluate an electrical signal whose frequency lies below the ultrasonic range.

4. A pump assembly according to claim 3, **characterised in that** the analysis unit (10) is designed for evaluating an electrical D.C. current signal

5. A pump assembly according to one of the preceding claims, **characterised in that** an enveloping curve detector (14) is arranged between the ultrasonic transducer (8) and the analysis unit (10) in an electrically connected manner.

6. A pump assembly according to one of the preceding claims, **characterised in that** the electrical signal of the frequency generator (2) is a rectangular signal.

7. A pump assembly according to one of the preceding claims, **characterised in that** a microcontroller (12) is provided, said microcontroller functioning as a frequency generator (2) and/or as an analysis unit (10).

8. A pump assembly according to claim 7, **characterised in that** the microcontroller (12) is connected to a display (42), to at least one signal lamp and/or to a loudspeaker.

9. A pump assembly according to one of the preceding claims, **characterised in that** the frequency generator (2) and the ultrasonic transducer (8) are electrically connected in series to a resistor (6)

10. A pump assembly (22) according to one of the preceding claims, **characterised in that** a protective unit is electrically connected to the device for dry-running recognition and to the drive motor of the pump (22), wherein the protective unit is designed for switching off the drive motor on recognising the dry-running of the pump (22) by the device for dry-running recognition.

## Revendications

1. Groupe motopompe (22) avec un carter de pompe et un dispositif de détection de la marche à sec comportant un transducteur ultrasonique (8) qui est disposé dans le carter de pompe (24) de façon telle que le transducteur ultrasonique (8) puisse entrer en contact avec un liquide à l'intérieur du carter de pompe (24) et dans lequel dispositif le transducteur ultrasonique (8) est relié électriquement à un générateur de fréquence (2) pour engendrer un signal électrique de fréquence prédéterminée et le dispositif de détection de la marche à sec comporte une unité d'analyse (10) qui analyse le signal électrique appliqué au transducteur ultrasonique (8) et qui est configurée pour détecter sur la base de l'amplitude de signal du signal électrique si le transducteur ultrasonique (8) est en contact, ou non, avec un liquide, le générateur de fréquence (2) et l'unité d'analyse (10) étant disposés dans un boîtier électronique (40) à l'extérieur du carter de pompe (24).

2. Groupe motopompe selon la revendication 1, **caractérisé en ce que** la fréquence prédéterminée du signal électrique du générateur de fréquence (2) est entre 20 kHz et 80 kHz, de préférence de 40 kHz.

3. Groupe motopompe selon la revendication 1 ou 2, **caractérisé en ce que** l'unité d'analyse (10) est configurée pour exploiter un signal électrique dont la fréquence est en-dessous de la plage des ultrasons.

4. Groupe motopompe selon la revendication 3, **caractérisé en ce que** l'unité d'analyse (10) est configurée pour exploiter un signal électrique de courant continu.

5. Groupe motopompe selon l'une des revendications précédentes, **caractérisé en ce qu'**un détecteur d'enveloppe (14) est disposé, électriquement raccordé, entre le transducteur ultrasonique (8) et l'unité d'analyse (10).

6. Groupe motopompe selon l'une des revendications précédentes, **caractérisé en ce que** le signal électrique du générateur de fréquence (2) est un signal rectangulaire.

7. Groupe motopompe selon l'une des revendications précédentes, **caractérisé en ce qu'**un microcontrôleur (12) est prévu qui fonctionne comme générateur de fréquence (2) et/ou comme unité d'analyse (10).

8. Groupe motopompe selon la revendication 7, **caractérisé en ce que** le microcontrôleur (12) est relié électriquement à un dispositif d'affichage (42), à au moins une lampe de signalisation et/ou à un haut-parleur.

9. Groupe motopompe selon l'une des revendications précédentes, **caractérisé en ce que** le générateur de fréquence (2) et le transducteur ultrasonique (8) sont reliés électriquement en série à une résistance (6).

10. Groupe motopompe (22) selon l'une des revendications précédentes, **caractérisé en ce qu'**une unité de protection est reliée électriquement au dispositif de détection de la marche à sec et au moteur d'entraînement de la pompe (22), l'unité de protection étant configurée pour arrêter le moteur d'entraînement lors de la détection de la marche à sec de la pompe (22) par le dispositif de détection de la marche à sec.
